# EUROPEAN PATENT APPLICATION

(11) **EP 2 820 988 A1**
(43) Date of publication of application: **07.01.2015**
(21) Application number: 14174006.8
(22) Date of filing: 25.06.2014
(51) Int. Cl.: A47K 5/12, B05B 11/00

(54) **Foam soap dispenser**

(30) Priority: 06.07.2013 CN 201320399504 U
(71) Applicant: Xiamen Runner Industrial Corporation, Xiamen 361021 (CN)
(72) Inventor: Chen, Xi-Min, Xiamen (CN); Peng, Ke-Sheng, Xiamen (CN); Liao, Li-Zhong, Xiamen (CN)
(74) Representative: Lang, Christian

(57) **Abstract**

A foam soap dispenser includes a cylindrical external casing having two ports, a first check valve installed at a liquid soap inlet end of the external casing, an inner tube installed at a liquid soap outlet end of the external casing, a second check valve fixed to an inner end of the inner tube, a slide plug installed between the inner end of the inner tube and an inner wall of the external casing and slidable with the inner tube along the inner wall of external casing, a gap formed between the slide plug and the inner tube and covered by a soft edge of the second check valve, a vent hole formed at the external casing, and a chamber formed between the two check valves and communicated with outside air when the soft edge of the second check valve is not covered onto the gap.

## Description

### BACKGROUND OF THE INVENTION

### 1. Field of Invention

The present invention relates to a foam soap dispenser.

### 2. Description of Related Art

A soap dispenser is a device that contains a liquid soap or a hand sanitizer. During use, users generally press a button to squeeze out a desired quantity of liquid soap or hand sanitizer, but the users usually squeeze too much liquid soap or hand sanitizer from the soap dispenser in order to clean the hands thoroughly. In fact, a less quantity of liquid soap or hand sanitizer can clean the hands already, but we always feel we need more soap for the cleaning purpose, and thus wasting lots of soap.

### SUMMARY OF THE INVENTION

In view of the shortcomings of the conventional foam soap dispenser, it is a primary objective of the present invention to overcome the shortcomings by providing a foam soap dispenser with a simple structure, a reasonable design, a low cost, and a feasible way of mixing liquid soap with air to produce a foamy liquid soap.

To achieve the foregoing objective, the present invention provides a foam soap dispenser comprising: a cylindrical external casing having two ports, a first check valve installed at a liquid soap inlet end in the external casing, an inner tube installed at a liquid soap outlet end of the external casing and movable along the axial direction of the external casing, a second check valve fixed to a head portion of an inner end of the inner tube, a slide plug installed between the head portion at the inner end of the inner tube and an inner wall of the external casing and capable of sliding with the inner tube along the inner wall of the external casing, a gap formed between the slide plug and the inner tube and covered by a soft edge of the second check valve, a vent hole formed on a peripheral wall at the top of the external casing, and a chamber formed between the two check valves and communicated with an outside air when the soft edge of the second check valve is not covered onto the gap.

Wherein, the first and second check valves are rubber duckbill valves.

A restoring spring is installed between the first and second check valves.

The first check valve has an edge pressing against a flange inside the external casing by a support compression ring.

The second check valve has an edge pressing against the head portion at the inner end of the inner tube by a support compression column.

The restoring spring is installed between the support compression ring and the support compression column.

The inner tube has an outer edge slidably coupled to an inner edge of a seat body at the liquid soap outlet end of the external casing, such that the inner tube can slide in an axial direction.

In the principle of operating the foam soap dispenser of the present invention, a user presses an outer end (a soap outlet) of the inner tube, such that the inner tube drives the slide plug at an inner end of the inner tube and the second check valve to move towards the liquid soap inlet end, and the chamber is compressed. If the pressure of the chamber is greater than the valve opening pressure of the second check valve, a mixture (foam liquid soap) of foamy air and liquid soap is formed in the chamber and squeezable from the soap outlet, so that the user can obtain the required foam liquid soap. When the user does not squeeze the inner tube, the inner tube is retracted by the action of the restoring spring. Now, a negative pressure is formed in the chamber, and the first check valve is opened, and pure liquid soap is sucked into the chamber. In the meantime, the soft edge of the second check valve covered onto the gap is spread open to let air enter into the chamber. After the inner tube resumes its original position, the chamber is filled up with the mixture of the foamy air and the liquid soap (or the foam liquid soap) which is readily provided for the user to squeeze and use.

The foam soap dispenser of the present invention has the features of a simple structure, a reasonable design, a low cost, an easy and convenient assembling process of components, and a convenient way of preparing the foamy liquid soap.

### BRIEF DESCRIPTION OF THE DRAWINGS

FIG. 1 is an exploded view of a foam soap dispenser of the present invention;
FIG. 2 is a sectional view of a foam soap dispenser at a status of compressing an inner tube of the present invention; and
FIG. 3 is a sectional view of a foam soap dispenser in the process of resuming an inner tube to its original position in accordance with the present invention.

### DETAILED DESCRIPTION OF THE INVENTION

The technical characteristics and objectives of the present invention can be further understood by the following detailed description of preferred embodiments and related drawings.

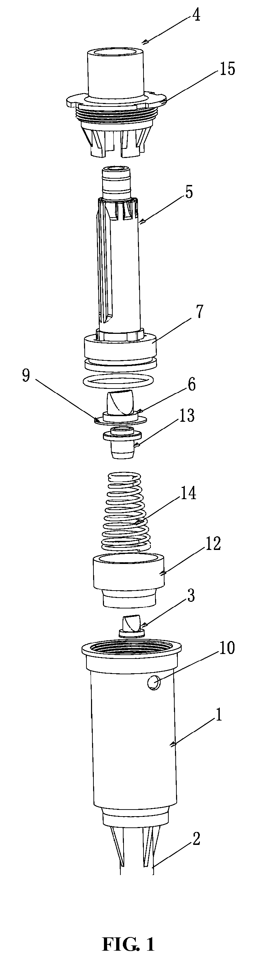

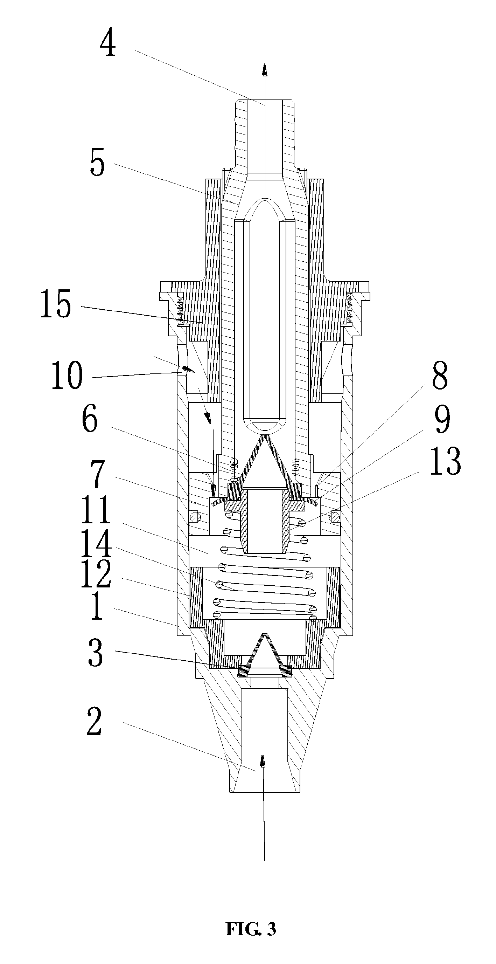

With reference to FIGs. 1-3, the foam soap dispenser of the present invention comprises a cylindrical external casing 1 having two ports, a first check valve 3 installed at a liquid soap inlet end 2 in the external casing 1, an inner tube 5 installed at a liquid soap outlet end 4 of the external casing 1 and movable along the axial direction of the external casing 1, a second check valve 6 fixed to a head portion of an inner end of the inner tube 5, a slide plug 7 installed between the head portion at the inner end of the inner tube 5 and an inner wall of the external casing 1 and capable of sliding with the inner tube 5 along the inner wall of the external casing 1, a gap 8 formed between the slide plug 7 and the inner tube 5 and covered by a soft edge 9 of the second check valve 6, a vent hole 10 formed on a peripheral wall at the top of the external casing 1, and a chamber 11 formed between the two check valves 3, 6 and communicated with an outside air when the soft edge 9 of the second check valve 6 is not covered onto the gap 8.

Wherein, the first and second check valves 3, 6 are rubber duckbill valves.

To facilitate resuming the inner tube 5 to its original position, a restoring spring 14 is installed between the first and second check valves 3, 6.

To facilitate the installation and fixation, an edge of the first check valve 3 presses against a flange inside the external casing 1 by a support compression ring 12.

To facilitate the installation and fixation, an edge of the second check valve 6 presses against the head portion at the inner end of the inner tube 5 by a support compression column 13.

For the reasonable design and stable structure, the reset spring 14 is installed between the support compression ring 12 and the support compression column 13.

For a smooth sliding, an outer edge of the inner tube 5 is slidably coupled to an inner edge of the seat body 15 at the liquid soap outlet end 4 of the external casing 1, such that the inner tube 5 can slide in an axial direction.

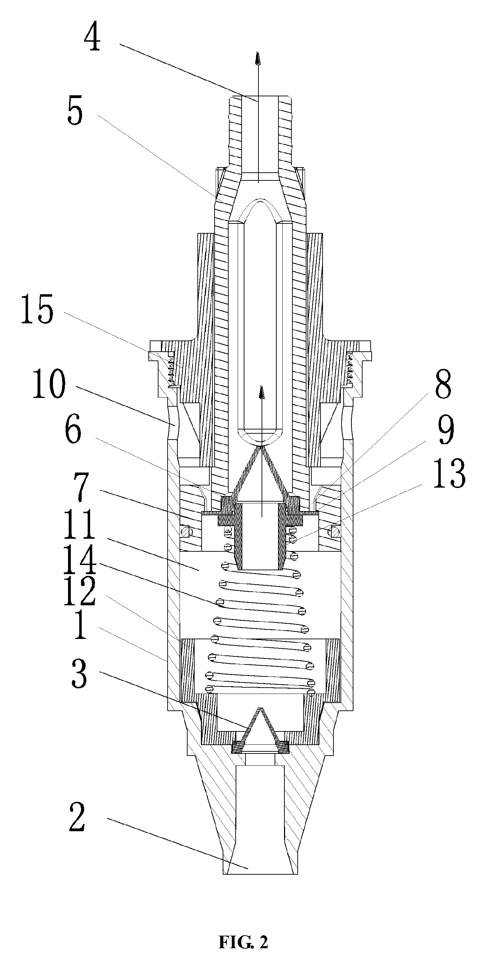

Referring to FIGs. 2-3, in the principle of operating the foam soap dispenser of the present invention, the user presses an outer end of the inner tube 5 (or a soap outlet), such that the inner tube 5 drives the slide plug 7 and the second check valve 6 to move towards the liquid soap inlet end 2, and the chamber 11 is compressed. When the pressure in the chamber 11 is greater than a valve opening pressure of the second check valve 6, a mixture of foamy air and liquid soap (which is a foam liquid soap) is formed in the chamber 11 and squeezed out from the soap outlet, so that the user can obtain a foam liquid soap. When the user does not squeeze the inner tube 5, the inner tube 5 is retracted by the action of the restoring spring. Now, a negative pressure is formed in the chamber 11, and the first check valve 3 is opened, and pure liquid soap is sucked into the chamber 11. In the meantime, the soft edge 9 of the second check valve 6 covered onto the gap 8 is spread open to let air enter into the chamber 11. After the inner tube 5 resumes its original position, the chamber 11 is filled up with the mixture of foamy air and liquid soap (which is the foam liquid soap) which is readily provided for the user to squeeze and use.

The foam soap dispenser of the present invention has the features of a simple structure, a reasonable design, a low cost, an easy and convenient assembling process of components, and a feasible way of mixing liquid soap with air to produce a foamy liquid soap.

While the invention has been described by means of specific embodiments, numerous modifications and variations could be made thereto by those skilled in the art without departing from the scope and spirit of the invention set forth in the claims.

## Claims

1. A foam soap dispenser, comprising: a cylindrical external casing, having two ports, a first check valve installed at a liquid soap inlet end in the external casing, an inner tube installed at a liquid soap outlet end of the external casing and movable along the axial direction of the external casing, a second check valve fixed to a head portion of an inner end of the inner tube, a slide plug installed between the head portion at the inner end of the inner tube and an inner wall of the external casing and capable of sliding with the inner tube along the inner wall of the external casing, a gap formed between the slide plug and the inner tube and covered by a soft edge of the second check valve, a vent hole formed on a peripheral wall at the top of the external casing, and a chamber formed between the two check valves and communicated with an outside air when the soft edge of the second check valve is not covered onto the gap.

2. The foam soap dispenser of claim 1, wherein the first and second check valves are rubber duckbill valves.

3. The foam soap dispenser of claim 2, further comprising a restoring spring installed between the first and second check valves.

4. The foam soap dispenser of claim 3, wherein the first check valve has an edge pressing against a flange inside the external casing by a support compression ring.

5. The foam soap dispenser of claim 4, wherein the second check valve has an edge pressing against the head portion at the inner end of the inner tube by a support compression column.

6. The foam soap dispenser of claim 5, wherein the restoring spring is installed between the support compression ring and the support compression column.

7. The foam soap dispenser of claim 6, wherein the inner tube has an outer edge slidably coupled to an inner edge of a seat body at the liquid soap outlet end of the external casing, such that the inner tube can slide in an axial direction.
